# EUROPEAN PATENT APPLICATION

(11) **EP 1 333 391 A1**
(43) Date of publication of application: **06.08.2003**
(21) Application number: 01904572.3
(22) Date of filing: 20.02.2001
(51) Int. Cl.: G06F 17/60, G07F 17/40

(54) **METHOD FOR MANAGING PHYSICAL DISTRIBUTION OF MERCHANDISE**

(30) Priority: 10.11.2000 JP 2000344083
(71) Applicant: Best Medical Service Kabushiki Gaisha, Saitama-shi, Saitama 330-0802 (JP)
(72) Inventor: SHINBO, Koichiro, Best Medical Service K.K., Saitama-shi, Saitama 330-0802 (JP)
(74) Representative: Möbus, Steffen
(86) International application number: JP0101210
(87) International publication number: WO02039333

(57) **Abstract**

A method for managing the physical distribution of merchandise by mainly using the Internet (100), merchandise sale supporting means (10) used by an eyeglasses seller (merchandise seller), inventory management means (311, 312,..., 31n) operated in eyeglasses shops (merchandise shops). Shops are registered, and POS is used by using a technique of reading a bar code such as a two-dimensional bar code or a technique such as an OCR for reading a character or a symbol, information about the merchandise inventory of the shops is monitored through the Internet, and all necessary merchandise is ordered at a time, thereby efficiently lowering the cost of the merchandise.

## Description

### BACKGROUND OF THE INVENTION

### Field of the Invention:

This invention relates to a method for managing physical distribution of merchandise, and more particular to a method for managing physical distribution of merchandise using the Internet and POS.

### Description of Related Art:

Up until now, stores for eyeglasses and contact lenses have bought various kinds of merchandise independently from the manufacturer or supplier and have sold that merchandise.

However, there have been the following problems with the prior technology.

In the case that each store keeps in stock all of the various kinds of merchandise related to eyewear and contact lenses needed by the users, there are many cases of having dead stock. Moreover, in the case of keeping in stock only fast selling merchandise, it is not possible to respond at once to a user's request. Furthermore, in the case of stocking small quantities of a wide variety of merchandise, there is a problem of increased costs.

Taking into consideration the problems above, the object of this invention is to provide a method for managing physical distribution of merchandise that efficiently reduces the cost of merchandise by registering a plurality of shops, employing POS that uses a technique of reading barcodes, including 2-dimensional and 3-dimensional barcodes, or a technique of reading symbols or characters such as OCR, monitoring the merchandise inventory data for each shop via the Internet, and collectively ordering necessary merchandise.

### SUMMARY OF THE INVENTION

The invention according to claim 1 is a method for managing physical distribution of merchandise that uses POS, and comprising: a first step in which a merchandise-sales-support means, which is used by a merchandise seller for performing wholesaling, receives merchandise orders over a network such as the Internet from an inventory-management means, which is used by a pre-registered merchandise shop; and a second step of shipping the merchandise to the merchandise shop based on the order; and where by registering all of the merchandise on a network server, the first step comprises a third step of prompting browsing of the merchandise of all the merchandise shops, and a fourth step of receiving the order based on the browsed merchandise; and where the second step employs POS that uses a 2-dimensional barcode, and comprises a step of managing the storage, retrieval and inventory of the merchandise.

The invention according to claim 2 is the method for managing physical distribution of merchandise of claim 1 where the first step further comprises a fifth step of receiving merchandise inventory data of the merchandise shop by POS that comprises the inventory-management means, and a sixth step of shipping the merchandise based on the received merchandise inventory data; and where the sixth step comprises a seventh step of determining whether or not the merchandise inventory of each kind of merchandise of the merchandise shop is the proper amount set in advance, and automatically shipping the needed merchandise when the amount is low.

The invention according to claim 3 is the method of managing physical distribution of merchandise of claim 1 or 2 where the seventh step comprises a step of setting automatic shipment of merchandise at specified periods such as daily, weekly, monthly, etc.

The invention according to claim 4 is the method of managing physical distribution of merchandise of any of the claims 1 to 3 where the fifth step comprises a step of comparing totals for each kind of merchandise based on merchandise inventory data received from the inventory-management means and the merchandise inventory of the merchandise shop with a reference inventory value that is preset for each kind of merchandise, and sending a merchandise order to the merchandise supplier, which includes the merchandise manufacturer, when a total amount of merchandise is low or less than the standard inventory value.

The invention according to claim 5 is the method of managing physical distribution of merchandise of any of the claims 1 to 4 where the POS uses a technique of reading barcodes, including 2-dimensional and 3-dimensional barcodes, or a technique of reading symbols or characters, such as OCR.

The invention according to claim 6 is a fee method of charging a fee for use of the POS in claims 1 to 5, which uses two-dimensional barcodes, to a registered merchandise shop or general merchandise shop to which the POS is loaned.

The invention according to claim 7 is the fee method of claim 6 where the POS uses a technique of reading barcodes, including 2-dimensional and 3-dimensional barcodes, or a technique of reading symbols or characters, such as OCR.

The invention according to claim 8 is memory medium on which a program is recorded that is capable of executing the method of managing physical distribution of merchandise of any of the claims 1 to 5.

The invention according to claim 9 is a method of selling merchandise where the merchandise-sales-support means of the merchandise seller in the method of managing physical distribution of merchandise of any of the claims 1 to 5 receives user data, which includes measurement results such as vision or body type and conditions of use such as how the merchandise will be used by the user, from the merchandise-sales means installed by the merchandise shop, selects the most suitable merchandise based on the user data from a database related to the registered merchandise, selects the most suitable merchandise supplier from among merchandise suppliers, including pre-registered merchandise manufacturers, sends the most suitable merchandise data from the merchandise-sales-support means of the merchandise seller to the merchandise-manufacturing means or terminal of the selected merchandise supplier over a network, and gives an instruction to supply said merchandise supply.

The invention according to claim 10 is the method of selling merchandise of claim 9 that receives questions from the user about the merchandise when receiving user data and gives answers to the questions and advice to the user.

The invention according to claim 11 is the method of selling merchandise of claim 9 or 10 that, when giving instructions to supply said merchandise, sends data related to the most suitable merchandise and estimate requests to a plurality of merchandise suppliers, selects the most suitable merchandise supplier based on estimate conditions such as the product price and delivery date sent from the merchandise supplier, and sends an instruction to supply the merchandise to the selected most suitable merchandise supplier.

The invention according to claim 12 is the method of selling merchandise of any of the claims 9 to 11 that when selecting the most suitable merchandise, selects lenses and frames for the eyewear based on user data, which includes user preferences such as conditions of use, color and design of the eyewear, a merchandise database that contains characteristics of the lenses and frames for the eyewear, measurement results of eye examination data such as vision, and face data that uses 3-dimensional image technology; combines them as the eyewear or merchandise and sends a synthesized image of the user wearing the eyewear using the face data and combined lenses and frames for the eyewear to the merchandise-sales means, and prompts the user to check the selection of the most suitable eyewear.

The invention according to claim 13 is the method of selling merchandise of any of the claims 9 to 12 that, when performing instructions to supply merchandise, selects a supplier of eyewear, which is the most suitable merchandise supplier, from among a plurality of merchandise suppliers that were pre-registered on the network server based on the lens characteristics and eyewear characteristics included in data for the most suitable eyewear selected by the user, and user preference data, and gives an instruction to supply the eyewear.

The invention according to claim 14 is the method of selling merchandise of any of the claims 9 to 13 where, when merchandise sold to a pre-registered user has a set merchandise code that can be used to specify the merchandise on a normal sales network, and information of a second sales price is received from the user over a network such as the Internet of the merchandise on another pre-registered sales network that is lower than the first sales price at the time the merchandise was sold, the sales price charged to the user is changed from the first sales price to the second sales price.

The invention according to claim 15 is the method of selling merchandise of any of the claims 9 to 14 where changing the sales price from a first sales price at the time the merchandise was sold to a second sales price according to information from the user is performed when the price is greater (higher) than a preset sales price.

The invention according to claim 16 is the method of selling merchandise of any of the claims 9 to 15 where changing the sales price from a first sales price at the time the merchandise was sold to a second sales price according to information from the user is performed within a preset period after merchandise is ordered.

The invention according to claim 17 is the method of selling merchandise of any of the claims 9 to 16 where when payment for merchandise from a registered user is finished, processes a refund to the user equal to the difference in the first price at time the merchandise was sold and second sales price according to information from the user.

The invention according to claim 18 is a memory means on which a program is recorded that is capable of executing the method of selling merchandise in any of the claims 9 to 16.

### BRIEF DESCRIPTION OF THE DRAWINGS

Fig. 1 is a drawing showing the construction for executing the method of managing physical distribution of merchandise of a first embodiment of the invention.
Fig. 2 is a flowchart showing an example of the flow of the method of managing physical distribution of merchandise of a first embodiment of the invention.
Fig. 3 is a drawing showing the construction for executing the method of managing physical distribution of merchandise of a second embodiment of the invention.
Fig. 4 is a drawing showing the construction of the eyewear-sales means shown in Fig. 3.
Fig. 5 is a drawing showing the construction of the merchandise-sales-support means shown in Fig. 3.
Fig. 6 is a flowchart showing an example of the operation of the merchandise-sales-support means shown in Fig. 3.

### DESCRIPTION OF THE PREFERRED EMBODIMENTS

The preferred embodiments of the invention will be explained in detail based on the drawings.

### (Embodiment 1)

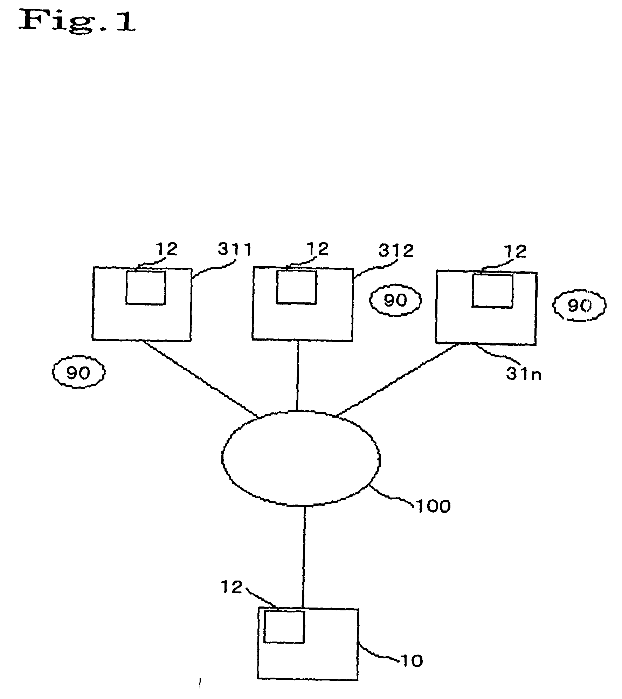

Fig. 1 is a drawing showing the construction for executing the method of managing physical distribution of merchandise of a first embodiment.

As shown in Fig. 1, the construction for executing the method of managing physical distribution of merchandise of this first embodiment comprises the Internet 100, a merchandise-sales-support means 10 that is operated by the eyewear seller (merchandise seller), and inventory-management means 311, 312, ..., 31n that are operated by each eyewear shop (merchandise shop).

The inventory-management means 311, 312, ..., 31n comprise a respective POS 12 that uses 2-dimensional barcodes (QR code). When each of the eyewear shops sells merchandise, the POS 12 is used to update the merchandise inventory database of the inventory-management means 311 (hereafter, inventory-management means 311 will be used as a representative).

The merchandise-sales-support means 10 receives orders from the inventory-management means 311 of the eyewear shop over a network such as the Internet 100. When an order is received, or after a specified time, it receives information about the merchandise inventory from the inventory-management means 311. Also, it is possible to receive information about the merchandise inventory from the inventory-management means 311 in realtime.

The merchandise-sales-support means 10 comprises a POS 12, and it uses this POS 12 to manage the merchandise inventory based on the inventory data of the eyewear shop and inventory of the eyewear seller.

Next, the operation of the method of managing physical distribution of merchandise will be explained.

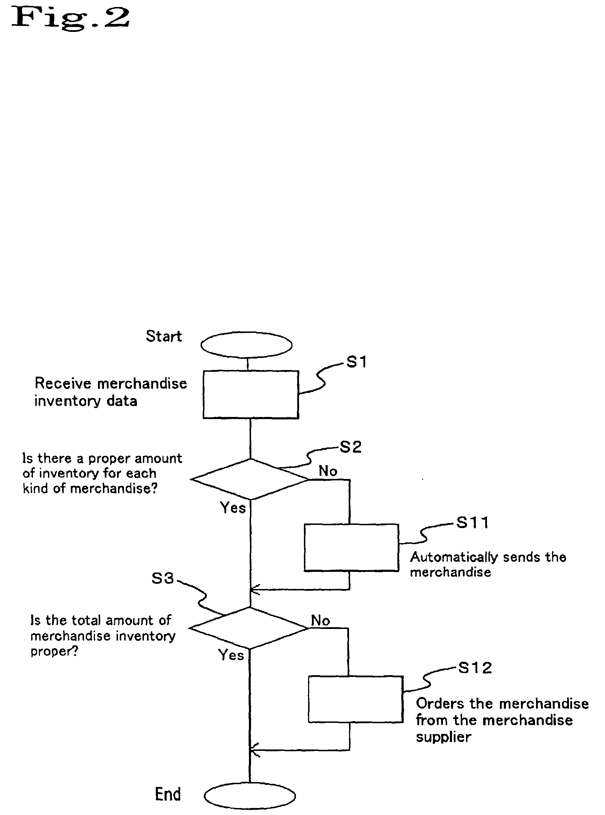

Fig. 2 is a flowchart showing an example of the flow of the method of managing physical distribution of merchandise of this embodiment.

When the merchandise-sales-support means 10 receives an order from the eyewear shop, or after a specified period of time, it receives information about the merchandise inventory from the inventory-management means 311 (step S1).

The merchandise-sales-support means 10 then determines whether the merchandise inventory for each eyewear shop and each kind of merchandise is suitable (step S2).

In step S2, when the merchandise inventory is low or less than a preset inventory amount (No, in the figure), the appropriate merchandise is automatically shipped to the eyewear shop (step S11), and a specified period, such as daily, weekly, monthly or the like can be set for this shipment of merchandise.

In step S2, when the merchandise inventory is the suitable amount or greater (Yes in the figure), the process goes to the next step.

The merchandise inventory information of all of the eyewear shops is totaled and the totals for each kind of merchandise is compared with the reference inventory that is preset for each kind of merchandise, to determine whether or not the totaled merchandise inventory is suitable (step S3).

In step S3, when the totaled merchandise inventory is low or less than the preset reference inventory (No in the figure), an order for the appropriate merchandise is sent to a merchandise supplier, such as the merchandise manufacturer (step S12), and the process ends.

In step S3, when the totaled merchandise inventory is high or greater than the preset reference inventory (Yes in the figure), the process ends.

The target merchandise is not limited to eyeglasses and contact lenses, and can be any merchandise whose inventory can be managed.

The method of managing physical distribution of merchandise of this first embodiment is constructed as described above and has the following effect.

By using POS 12 that uses 2-dimensional barcodes for the inventory management of each of the shops, it is possible to manage many kinds of merchandise for many stores. Also, by monitoring the merchandise inventory data of each store via the Internet 100, it is possible to prevent inventory at each of the shops from running out.

Moreover, by ordering necessary merchandise collectively, it is possible to efficiently reduce the cost of the merchandise.

### (Embodiment 2)

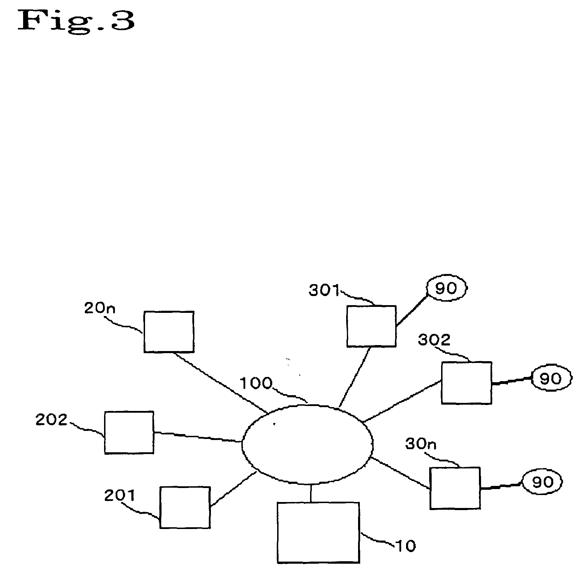

Fig. 3 is a drawing showing the construction for executing the method of managing physical distribution of merchandise of a second embodiment.

As shown in Fig. 3, the construction for executing the method of managing physical distribution of merchandise of this embodiment comprises: the Internet 100, a merchandise-sales-support means 10 that is managed by the eyewear seller (merchandise seller), merchandise-manufacturing means (eyewear-manufacturing means, terminal) 201, 202, ..., 20n that is managed by each eyewear manufacturer (merchandise manufacturer, merchandise supplier), and merchandise-sales means (eyewear-sales means) 301, 302, ..., 30n that is managed by each eyewear shop (merchandise shop).

The merchandise-sales-support means 10 receives measurement results, such as eye-examination data or vision of the user 90 and face data that uses 3-dimensional image technology, and data related to the user 90, such as how the eyewear will be used, from the eyewear-sales means 301 (hereafter, eyewear-sales means 301 will be used as a representative) via the Internet 100.

Moreover, the merchandise-sales support means 10 selects data related the most suitable eyewear (merchandise) for the user based on the data related to the user 90, and sends it to the eyewear-manufacture means 201 (hereafter, eyewear-manufacture means 201 will be used as a representative), and instructs that the eyewear be manufactured. Also, it can instruct where to deliver the eyewear.

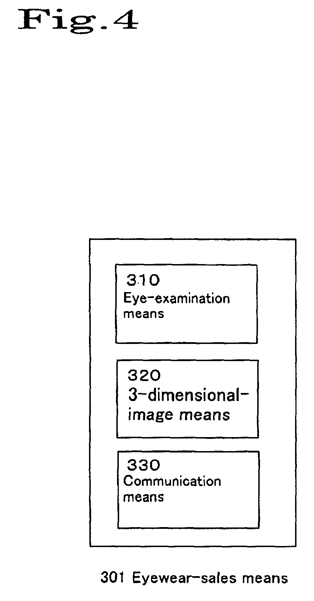

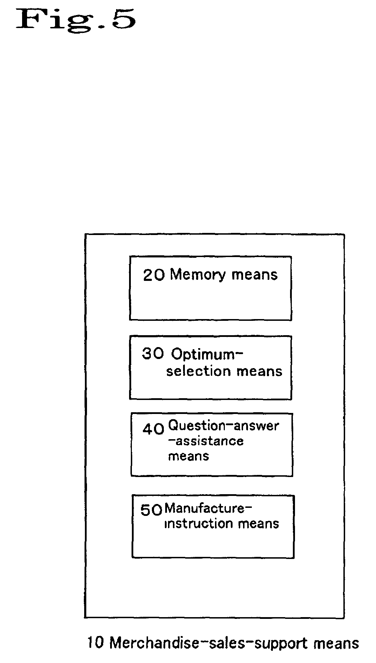

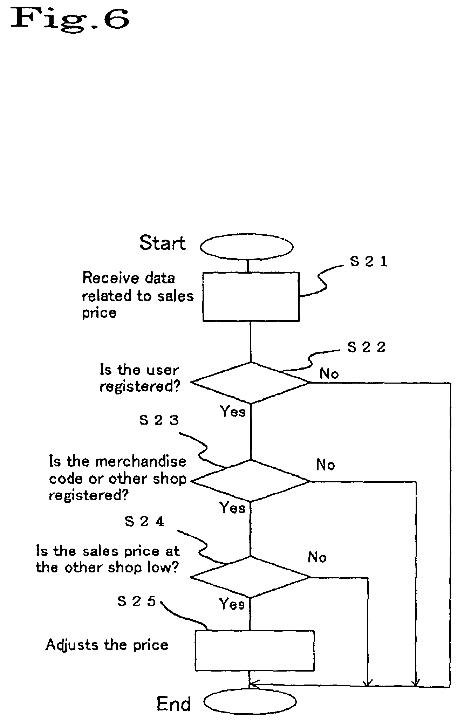

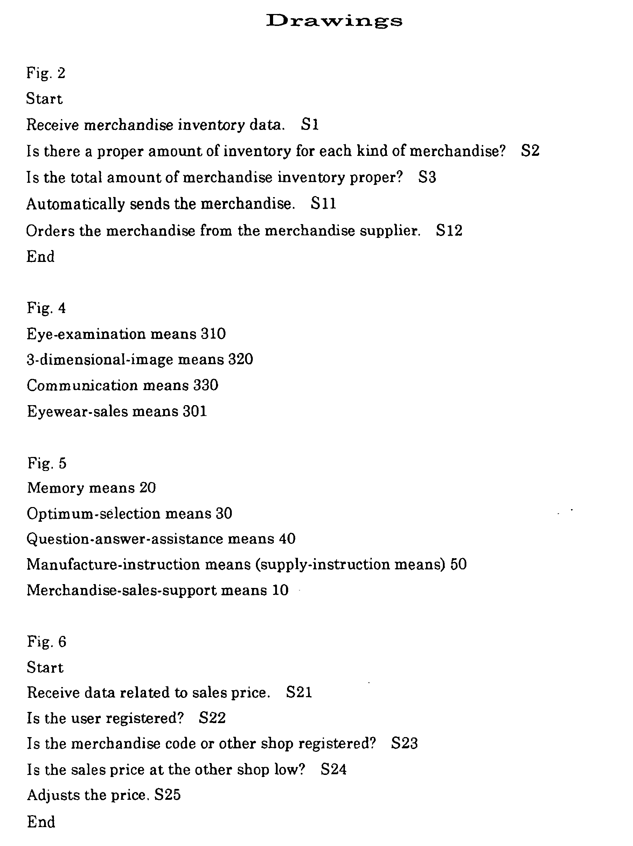

Fig. 4 is a drawing showing the construction of the eyewear-sales means 301 shown in Fig. 3.

The eyewear-sales means 301 comprises an eye-examination means 310 for the user 90, a 3-dimensional-image means 320, and an interactive-type communication means 330 that asks questions about the conditions of use.

The communication means 330 can add or update the content of the questions stored in its database. For example, in addition to selection choices corresponding to questions, input such as questions from the user 90 are received, and answers to those questions and advice can be given to the user 90. These questions, answers and advice are used in adding to and updating the question contents.

The eyewear-sales means 301 sends data related to the user 90, including eye-examination data such as vision of the user 90 from the eye-examination means 310, face data from the 3-dimensional-image means 320 and conditions of use such as how the eyewear will be used from the communication means 330, to the merchandise-sales-support means 10 via the Internet 100.

Fig. 5 is a drawing showing the construction of the merchandise-sales-support means 10 shown in Fig. 3.

The merchandise-sales-support means 10 comprises a memory means 20, an optimum-selection means 30, question-answer-assistance means 40 and manufacture-instruction means (supply-instruction means) 50.

The memory means 20 stores the database related to the question contents that are stored by the communication means 330 shown in Fig. 4.

The optimum-selection means 30 selects candidates for the most suitable eyewear from the database related to eyewear registered in the memory means 20, based on the received face data included in the data related to the user 90 and preferences of the user 90 that include the color and design of the eyewear.

Also, it combines the face data with the selected eyewear and displays synthesized images of the worn eyewear and prompts the user 90 to select the most suitable eyewear.

The method of selection is performed based on measurement results containing eye-examination data such as vision, conditions of use, such as how the eyewear will be used, lens characteristics, and characteristics of the eyewear frames, and is narrowed down by conditions such as lens conditions such as material, specific weight, thickness, for example, lightweight plastic or hard, thick glass, and frame conditions such as material and specific gravity, for example, lightweight, anti-corrosive, and the like.

When the question-answer-assistance means 40 receives data related to the user 90, including questions from the user 90 that are entered by the communication means 330, that data is used for adding to or updating the database related to the question contents stored by the communication means 330 in the memory means 20. Also, when the technician operating the question-answer-assistance means 40 is capable of answering the questions, the answers and advice are sent in realtime to the communication means 330 and the user 90 is notified.

The manufacture-instruction means 50 sends the data related to the most suitable eyewear received from the merchandise-sales-support means 10 to the eyewear-manufacture means 201 (hereafter used as a representative eyewear-manufacture means) via the Internet 100, and instructs that the eyewear be manufactured.

Moreover, based on the preferences of the user 90 such as lens characteristics, eyewear frame characteristics, color, material, design and the like that are contained in the data related to the most suitable eyewear and that are selected by the user 90, the manufacture-instruction means 50 selects the most suitable manufacturer from among the eyewear manufacturers that manage the eyewear-manufacture means 201, 202, ..., 20n that are pre-registered on the server of the Internet 100, and instructs that the eyewear be manufactured.

Furthermore, the manufacture-instruction means 50 can send data related to the most suitable eyewear and an estimate request to a plurality of pre-registered eyewear manufacturers, and select the most suitable eyewear manufacturer based on estimate conditions that include the product cost and delivery date that are sent from the eyewear manufacturer, and then instruct the selected most suitable eyewear manufacturer to manufacture the eyewear.

Also, it is possible for the manufacture-instruction means 50 to send instructions to the eyewear manufacturer to deliver the manufactured eyewear to a specified location such as a specified place or specified person.

Next, another example of using the merchandise-sales-support means 10 shown in Fig. 3 will be explained.

Fig. 6 is a flowchart showing an example of the operation of the merchandise-sales-support means 10 shown in Fig. 3.

In the case that merchandise code, which can specify merchandise on a normal sales network, is set for the merchandise sold to a pre-registered user 90, and sales price information is received from the user 90 of a second sales price on another pre-registered normal sales network that is lower than the first sales price at the time the merchandise was ordered, the sales price charged to the user 90 is changed from the first sales price to the second sales price.

The merchandise-sales-support means 10 receives information related to the merchandise code and sales price of the merchandise in question at another shop via the Internet 100 from the user that purchased the merchandise (step S21).

It then determines whether or not the sender of the data is a registered user 90 (step S22).

In step S22 when the sender is a registered user 90 (Yes in the figure), the merchandise-sales-support means 10 determines whether or not the received merchandise code and other shop are registered (step S23).

In step S23, when the merchandise code and other shop are registered (Yes in the figure), the merchandise-sales support means 10 determines whether the sales price at the other shop (second sales price) is lower then the sales price given to the user 90 (first sales price) (step S24).

In step S24, when the sales price at the other shop is lower (Yes in the figure), price adjustment is performed to replace the price given to the user 90 with the sales price at the other shop (step S25),

In step S24, when the sales price at the other shop is not lower (No in the figure), processing ends.

In step S23, when either the received merchandise code or other sales shop is not registered (No in the figure), processing ends.

In step S22, when the user 90 is not registered (No in the figure), processing ends.

Also, changing the price from the first sales price to the second sales price is performed when the sales price is greater than (higher than) a preset sales price.

An invoice is sent to the user 90 according to the changed sales prices.

Furthermore, changing the price from the first sales price to the second sales price is performed within a preset period after the merchandise is ordered.

In the case that the user 90 has finished paying for the merchandise, it is possible to process a discount for the user 90 equal to the difference in the first sales price and second sales price.

When a merchandise code is set for the merchandise that was sold to a pre-registered user 90 that makes it possible to specify the merchandise on a normal sales network, and information is received over a network such as the Internet 100 from the user 90 that a second sales price for merchandise on another pre-registered normal sales network is lower than a first sales price at the time merchandise was ordered, the sales price is changed from the first sales price given to the user 90 to the second sales price.

Also, changing the price from the first sales price to the second sales price is performed when the sales price is greater than (higher than) a preset sales price.

Furthermore, changing the price from the first sales price to the second sales price is performed within a preset period after the merchandise is ordered.

In the case that the user 90 has finished paying for the merchandise, it is possible to process a discount for the user 90 equal to the difference in the first sales price and second sales price.

This second embodiment of a method for managing physical distribution of merchandise is constructed as described above, so it has the following effects in addition to the effects of the first embodiment.

By giving answers to questions from the user 90 and providing advise after receiving data related to the user 90, which includes eye-examination data such as the vision of the user 90, face data, and conditions of use such as how the eyewear will be used, it is possible for the user 90 to satisfactorily select the most suitable eyewear.

By selecting the most suitable eyewear manufacturer from among pre-registered eyewear manufacturers, sending data related to the selected eyewear via the Internet 100 and giving instructions (request) to manufacture the eyewear, it is possible to ask an eyewear manufacturer, which was determined to be the most suitable according to their record, to manufacture the eyewear. It is also possible to do away with space for manufacturing.

Also, by sending an estimate request, it is possible to provide the most suitable eyewear from the aspect of delivery date and cost to the user 90.

The merchandise that is the object of the merchandise-sales means 301 of the method for managing physical distribution of merchandise of this embodiment is not limited to eyewear, and the embodiment can be applied as well to other accessories such as clothing, hats, shoes, rings and the like. There is no need for an in-shop specialist or technician at the sales location where the merchandise-sales means 301 is set up, so use at stores such as convenience stores is also possible.

It is also evident that a technique of reading barcodes, including QR code, Vericode, 3-dimensional code, or a technique of reading symbols or characters such as OCR can be applied instead of the 2-dimensional barcode used in this embodiment.

Moreover, the invention is not limited to this embodiment, and can be applied to suitable technology related to this method for managing physical distribution of merchandise.

Furthermore, the number, location and shape of the above components are not limited by this embodiment, and any number, location or shape that is suitable to the invention is possible. In the drawings, the same code numbers are used for identical elements.

### Industrial Applicability

The invention constructed as described above has the following effects.

By using POS that utilizes barcode technology, which includes 2-dimensional barcodes, at each of a plurality of shops, it is possible to perform detailed management of inventory merchandise. Also, by monitoring the merchandise inventory data of each shop via the Internet, it is possible to prevent the inventory from running out at each of the shops.

Also, by collectively ordering required merchandises it is possible to efficiently reduce the cost of the merchandise.

By giving answers to questions from the user and providing advise after receiving data related to the user, which includes eye-examination data such as the vision of the user, face data, and conditions of use such as how the eyewear will be used, it is possible for the user to satisfactorily select the most suitable eyewear.

Also, by using the Internet, it is possible to select an eyewear manufacturer from among a plurality of eyewear suppliers, including eyewear manufacturers, that is the most suitable from the aspect of technology, cost and delivery date.

By receiving a request to correct the sales price of merchandise already purchased and adjusting the sales price when a user finds that the merchandise is being sold more cheaply at another pre-registered shop, it is possible to prevent losing users.

Since discounts are adjusted when the sale price is greater than (higher than) a preset sales price, it is possible to stop the sales price from becoming too low.

By adjusting the sales price within a preset period after merchandise has been ordered, it is possible to limit the period for receiving price adjustments.

In the case that the merchandise has already been paid for, it is possible to adjust the price by refunding money to the user equal to the difference between the first sales price and second sales price.

## Claims

1. A method for managing physical distribution of merchandise that uses POS, and comprising:
a first step wherein a merchandise-sales-support means, which is used by a merchandise seller for performing wholesaling, receives merchandise orders over a network such as the Internet from an inventory-management means, which is used by a pre-registered merchandise shop; and
a second step of shipping said merchandise to said merchandise shop based on said order; and wherein
by registering all of said merchandise on a network server, said first step comprises a third step of prompting browsing of said merchandise of all of said merchandise shops, and
a fourth step of receiving said orders based on said browsed merchandise; and where
the second step employs POS that uses a 2-dimensional barcode, and comprises a step of managing the storage, retrieval and inventory of said merchandise.

2. The method for managing physical distribution of merchandise of claim 1 wherein
the first step further comprises:
a fifth step of receiving merchandise inventory data of said merchandise shop by POS that comprises said inventory-management means, and
a sixth step of shipping said merchandise based on the received said merchandise inventory data; and wherein
the sixth step comprises a seventh step of determining whether or not said merchandise inventory of each kind of said merchandise of said merchandise shop is the proper amount set in advance, and automatically shipping the needed merchandise when the amount is low.

3. The method of managing physical distribution of merchandise of claim 1 or 2 wherein the seventh step comprises a step of setting automatic shipment of said merchandise at specified periods such as daily, weekly, monthly, etc.

4. The method of managing physical distribution of merchandise of any of the claims 1 to 3 wherein the fifth step comprises a step of comparing totals for each kind of said merchandise, which are based on said merchandise inventory data that is received from said inventory-management means and said merchandise inventory of said merchandise shop, with a reference inventory value that is preset for each kind of merchandise, and sending a merchandise order to a merchandise supplier, including the merchandise manufacturer, when the total amount of merchandise is low or less than said reference inventory value.

5. The method of managing physical distribution of merchandise of any of the claims 1 to 4 wherein said POS uses a technique of reading barcodes, including 2-dimensional and 3-dimensional barcodes, or a technique of reading symbols or characters, such as OCR.

6. A fee method of charging a fee for use of said POS in claims 1 to 5, which uses two-dimensional barcodes, to a registered merchandise shop or general merchandise shop to which said POS is loaned.

7. The fee method of claim 6 wherein said POS uses a technique of reading barcodes, including 2-dimensional and 3-dimensional barcodes, or a technique of reading symbols or characters, such as OCR.

8. A memory medium on which a program is recorded that is capable of executing the method of managing physical distribution of merchandise of any of the claims 1 to 5.

9. A method of selling merchandise wherein the merchandise-sales-support means of the merchandise seller in the method of managing physical distribution of merchandise of any of the claims 1 to 5 receives user data, including measurement results such as vision or body type and conditions of use such as how merchandise will be used by the user, from the merchandise-sales means installed by the merchandise shop,
selects the most suitable merchandise based on said user data from a database related to registered merchandise,
selects the most suitable merchandise supplier from among merchandise suppliers, including pre-registered merchandise manufacturers,
sends said most suitable merchandise data from the merchandise-sales-support means of the merchandise seller to the merchandise-manufacturing means or terminal of said selected merchandise supplier over said network, and gives instructions to supply said merchandise.

10. The method of selling merchandise of claim 9 that receives questions from said user about said merchandise when receiving said user data and gives answers to said questions and advice to said user.

11. The method of selling merchandise of claim 9 or 10 that, when giving an instruction to supply said merchandise, sends data related to said most suitable merchandise and estimate requests to a plurality of merchandise suppliers, selects the most suitable merchandise supplier based on estimate conditions such as the product price and delivery date sent from the merchandise supplier, and sends an instruction to supply the merchandise to the selected most suitable merchandise supplier.

12. The method of selling merchandise of any of the claims 9 to 11 that, when selecting the most suitable merchandise, selects lenses and frames for the eyewear based on said user data, which includes user preferences such as conditions of use, color and design of the eyewear, a merchandise database, which contains characteristics of the lenses and frames for the eyewear, measurement results of eye examination data such as vision, and face data that uses 3-dimensional image technology, combines them as the eyewear or merchandise, and
sends a synthesized image of said user, wearing the eyewear using the face data and combined lenses and frames for the eyewear, to the merchandise-sales means, and prompts said user to check the selection of the most suitable eyewear.

13. The method of selling merchandise of any of the claims 9 to 12 that, when giving instructions to supply said merchandise, selects a supplier of eyewear, which is the most suitable merchandise supplier from among a plurality of merchandise suppliers that were pre-registered on said network server based on the lens characteristics and eyewear characteristics included in data related to the most suitable eyewear selected by said user, and said user preference data, and gives an instruction to supply said eyewear.

14. The method of selling merchandise of any of the claims 9 to 13 that, when merchandise sold to a pre-registered user has a set merchandise code that can be used to specify said merchandise on a normal sales network, and information of a second sales price is received from said user over a network such as the Internet of said merchandise on another pre-registered sales network that is lower than the first sales price at the time the merchandise was sold, the sales price charged to said user is changed from said first sales price to said second sales price.

15. The method of selling merchandise of any of the claims 9 to 14 wherein changing the sales price from the first sales price at the time the merchandise was sold to a second sales price according to information from said user is performed when the price is greater (higher) than a preset sales price.

16. The method of selling merchandise of any of the claims 9 to 15 wherein changing the sales price from a first sales price at the time the merchandise was sold to a second sales price according to information from said user is performed within a preset period after merchandise is ordered.

17. The method of selling merchandise of any of the claims 9 to 16 where when payment for merchandise from a registered user is finished, a refund is processed for said user that is equal to the difference in the first price at time the merchandise was sold and second sales price according to information from said user.

18. A memory means on which a program is recorded that is capable of executing the method of selling merchandise in any of the claims 9 to 16.
